# EUROPEAN PATENT APPLICATION

(11) **EP 3 598 276 A1**
(43) Date of publication of application: **22.01.2020**
(21) Application number: 17901078.0
(22) Date of filing: 16.10.2017
(51) Int. Cl.: G06F 3/0354

(54) **TERMINAL CONTROL METHOD AND SYSTEM, SETTING ADAPTATION APPARATUS AND MOBILE TERMINAL**

(30) Priority: 14.03.2017 CN 201710151241
(71) Applicant: ZTE Corporation, Shenzhen, Guangdong 518057 (CN)
(72) Inventor: FANG, Wen, Shenzhen Guangdong 518057 (CN)
(74) Representative: Petraz, Gilberto Luigi
(86) International application number: PCT/CN2017/106267
(87) International publication number: WO 2018/166196

(57) **Abstract**

Provided are a terminal control method and system, setting adaptation apparatus (20), and a mobile terminal (10). The terminal control system includes: a mobile terminal (10), setting adaptation apparatus (20), and an external input device (30). The setting adaptation apparatus (20) is connected to a second connecting pin in a plug-in card slot of the mobile terminal through a first connecting pin; the external input device (30) acquires a control signal corresponding to a user operation action and transmits the control signal to the setting adaptation apparatus (20), and the setting adaptation apparatus (20) transmits the control signal to the mobile terminal (10); and after receiving the operation signal, the mobile terminal (10) performs a corresponding operation on the mobile terminal (10) according to the operation signal. The technical solution enables a user to conveniently perform functions of a mouse and more control functions of a mobile terminal outside the terminal, by way of which the user can experience the fun of playing games on the mobile terminal (10) with a mouse as on a computer, and during the game the user can directly complete an operation using a mouse-like input tool in hand, which is very convenient.

## Description

### CROSS-REFERENCE TO RELATED APPLICATIONS

This disclosure is based on and claims the priority of Chinese patent application 201710151241.X, entitled "Terminal control method and system, setting adaptation apparatus and mobile terminal" and filed on March 14, 2017, the entirety of which is incorporated herein by reference.

### FIELD OF THE INVENTION

The disclosure relates to mobile terminals technology, and in particular, to a terminal control method and system, setting adaptation apparatus, and a mobile terminal.

### BACKGROUND OF THE INVENTION

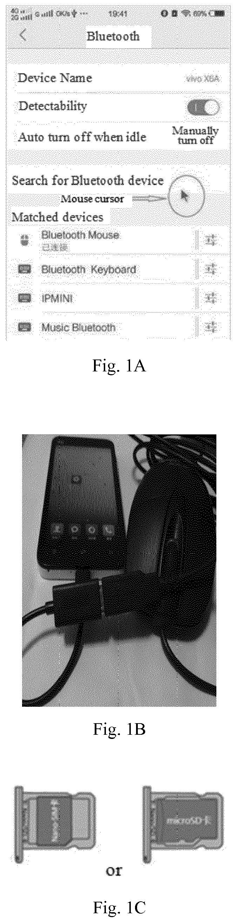

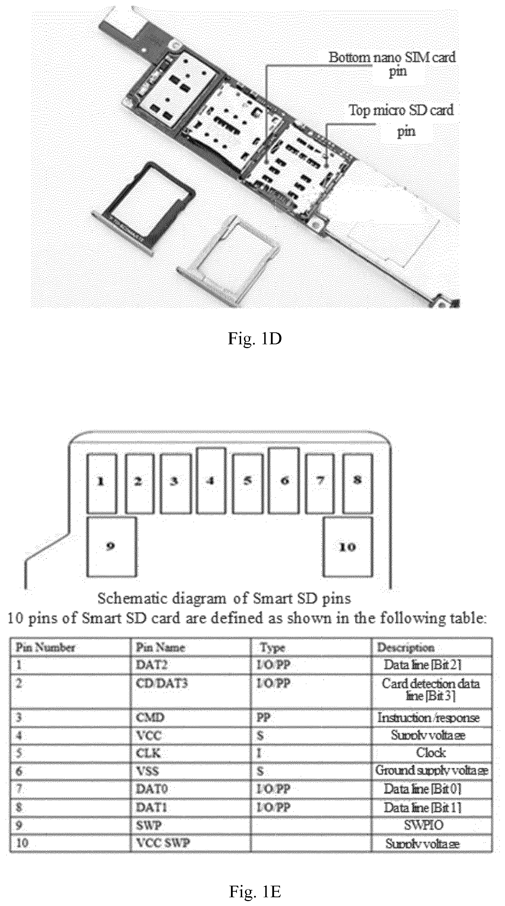

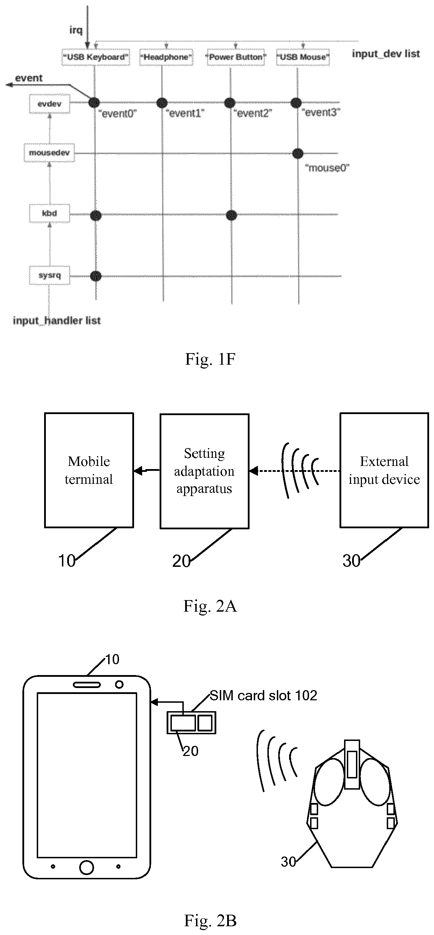

The mouse support function of Android systems has been available for a long time, and currently both Bluetooth and wired mouse can be connected to an Android mobile phone for use. Figs. 1A and 1B are schematic diagrams of a terminal connected with a Bluetooth mouse and a wired mouse, respectively.

According to the current processing of an Android system, when a mouse or a mouse-like input tool can be used on a mobile terminal, after the mouse (a mouse is used herein as an example for illustration) is successfully connected, the left button of the mouse can perform a click operation, the right button can perform a return operation, and the scroll wheel can perform a home key operation. This can meet the needs of some users, but there are still many practical operations that cannot be conveniently done with a mouse. For example, functions such as unlocking with an unlocking key, directly accessing an operation interface of a certain application with a shortcut key (for example, photographing with a photographing shortcut key), switching on or off GPS, performing fingerprint recognition, etc., none of these cannot be performed by a mouse. The above factors limit the use of a mouse or a mouse-like input tool on a mobile terminal.

### SUMMARY OF THE INVENTION

In order to solve the above problem, embodiments of the disclosure provide a terminal control system, method and setting adaptation apparatus, which allow a user to conveniently separate mouses and more control functions of a mobile terminal from the terminal, and to perform the functions externally.

In order to solve the above problem, an embodiment of the disclosure provides a terminal control system. The system includes: a mobile terminal, setting adaptation apparatus, and an external input device.

The setting adaptation apparatus is connected to a second connection pin in a plug-in card slot of the mobile terminal through a first connection pin.

The external input device is configured to acquire a control signal corresponding to a user operation action, and transmit the control signal to the setting adaptation apparatus, and the setting adaptation apparatus is configured to transmit the control signal to the mobile terminal.

The mobile terminal is configured to perform, after receiving the operation signal, a corresponding operation on the mobile terminal based on the operation signal.

Preferably, the external input device is configured to transmit the control signal to the setting adaptation apparatus by means of Bluetooth or NFC or the like.

To solve the above technical problem, an embodiment of the disclosure further provides setting adaptation apparatus. The setting adaptation apparatus includes: a wireless communication module, a first connection pin, and a driver module.

The wireless communication module is configured to receive a control signal corresponding to an operation action sent by an external input device, and transmit the control signal to the driver module.

The driver module is configured to convert the control signal corresponding to the operation action into an operation signal recognizable by the mobile terminal.

The driver module is configured to transmit the operation signal to the mobile terminal through the first connection pin.

To solve the above technical problem, an embodiment of the disclosure further provides a mouse device. The mouse device includes a left button, a right button, and a scroll wheel. The mouse device further includes at least one of a screen unlocking button, a volume+ button, a volume- button, a camera button, and a call control button.

To solve the above technical problem, an embodiment of the disclosure further provides a device mobile terminal. The mobile terminal is configured to receive an operation signal through a second connection pin in a plug-in card slot, and perform, after receiving the operation signal, a corresponding operation on the mobile terminal based on the operation signal.

To solve the above technical problem, an embodiment of the disclosure further provides a terminal control method. The method includes:
acquiring a control signal corresponding to a user operation action, and transmitting the control signal to setting adaptation apparatus, by an external input device;
transmitting, by the setting adaptation apparatus, the control signal to the mobile terminal, the control signal being transmitted to a second connection pin in a plug-in card slot of the mobile terminal through a first connection pin of the adaptation apparatus; and
performing, by the mobile terminal, a corresponding operation on the mobile terminal based on the operation signal after the mobile terminal receives the operation signal.

Preferably, data transmission of the external device and the setting adaptation apparatus is performed in a wireless and encrypted manner.

Preferably, when the setting adaptation apparatus is connected with the mobile terminal, the setting adaptation apparatus first informs the mobile terminal of a device type of the external input device, the device type matching an input device wirelessly connected with the setting adaptation apparatus.

Preferably, the device type of the external input device includes at least one of a mouse, a keyboard, fingerprint recognition, and a terminal button.

To solve the above technical problem, an embodiment of the disclosure further provides a terminal control method. The terminal control method includes:
receiving a control signal corresponding to an operation action sent by an external input device;
converting the control signal corresponding to the operation action into an operation signal recognizable by a mobile terminal; and
transmitting the operation signal to a second connection pin in a plug-in card slot of the mobile terminal through a first connection pin.

Preferably, the terminal control method further includes:
acquiring permission data from the external input device; and
transmitting, after an application initiating permission request sent by the mobile terminal is received, the permission data corresponding to the application initiating permission request to the mobile terminal.

To solve the above technical problem, an embodiment of the disclosure further provides a mobile terminal. The mobile terminal is configured to receive an operation signal through a second connection pin in a plug-in card slot, and perform, after receiving the operation signal, a corresponding operation on the mobile terminal based on the operation signal.

Compared with the existing technologies, the disclosure provides technical solutions including a mobile terminal, setting adaptation apparatus, and an external input device. The setting adaptation apparatus is connected to a second connection pin in a plug-in card slot of the mobile terminal through a first connection pin. The external input device acquires a control signal corresponding to a user operation action, and transmits the control signal to the setting adaptation apparatus. The setting adaptation apparatus transmits the control signal to the mobile terminal. After receiving the operation signal, the mobile terminal performs a corresponding operation on the mobile terminal based on the operation signal. The technical solutions of the disclosure allow the user to conveniently separate mouses and more control functions of a mobile terminal from the terminal, and to perform the functions externally, by way of which the user can experience the fun of playing games on a mobile terminal with a mouse as on a computer, and meanwhile during the game, whenever it is necessary to answer a call or to suddenly stop the screen, the user can directly complete the operation using a mouse-like input tool in hand, which is very convenient.

### BRIEF DESCRIPTION OF THE DRAWINGS

The following is a description of the drawings in the embodiments of the disclosure. The drawings in the embodiments are provided for further understanding the disclosure, and are intended to illustrate the disclosure together with the description, and not to limit the scope of the disclosure.
Figs. 1A and 1B are schematic diagrams of a terminal connected with a Bluetooth mouse and a wired mouse, respectively;
Figs. 1C and 1D are schematic diagrams of a card slot on a terminal side;
Fig. IE is a schematic diagram of a Smart SD card interface;
Fig. IF is a schematic diagram showing responses of an Android device to an external device;
Figs. 2A and 2B are schematic diagrams showing components of a terminal control system provided by an embodiment of the disclosure;
Fig. 2C is a schematic structural diagram of setting adaptation apparatus 20;
Fig. 3 is a schematic structural diagram of a mouse device 40;
Fig. 4 is a schematic structural diagram of an external input device 30;
Figs. 5A, 5B, and 5C are schematic diagrams each showing implementation mode of a card slot and a setting adaptation apparatus provided by an embodiment of the disclosure;
Fig. 6 is a schematic diagram showing an embodiment of a finger ring external input device provided by an embodiment of the disclosure;
Fig. 7 is an operating flowchart of a setting adaptation apparatus when being used for decryption according to an embodiment of the disclosure ;
Fig. 8 is a flowchart of a connection process of a setting adaptation apparatus with a plurality of external devices simultaneously via an interface provided by an embodiment of the disclosure.

### DETAILED DESCRIPTION OF THE EMBODIMENTS

In order to make the disclosure easily understood by those skilled in the art, the disclosure is further described below in conjunction with the accompanying drawings. This description, however, is not intended to limit the scope of the disclosure. It should be noted that the embodiments in the present application and various implementation modes in the embodiments may be combined with one another as long as there is no conflict.

Before an introduction to the embodiments of the disclosure, the technology about a SIM card slot of a terminal is first described. The card slot for a nano sim card and the card slot compatible with both a nano sim card and an SD card are now common in a terminal. As shown in Fig. 1C, one card slot can hold a horizontally placed nano sim card, and can also hold a vertically placed SD card; and the terminal is provided therein with two sets of pins corresponding respectively to the SIM card and the SD card.

Fig. ID is a schematic diagram of a card slot on a terminal side which matches Fig. 1C, in which structures of pins in the terminal side can be seen.

The following describes a smart SD card interface on the terminal.

The smart SD card (10-pin standard SD card) interface is shown in Fig. IE. A corresponding micro SD card on the terminal has only 1 to 8 pins, which are used for power supply, clocking, command interaction, and data transmission. When the terminal loads the SD card, the Android system first detects insertion of the device (through the No. 2 pin), and then the kernel transmits a Uevent message to Android Void (device manager) based on the content read from the No. 2 pin. The Void then processes the data acquired from the device based on the content of the message.

To put it simply, if the Uevent message declares that the external device is an SD card, the device manager processes the data acquired from the data pin in a manner of a storage device. On the contrary, if the Uevent message declares that the external device is other devices such as a keyboard device, and the driver layer has performed corresponding process on data transmitted by other pins, the Android system processes the content read from the data pin as a keyboard input.

Input management architecture of an Android device:
An Android device can simultaneously connect a plurality of input devices, such as a touch screen, a keyboard, a mouse, etc. The user's operation on the device will cause an input interruption, and convert into an event via an interrupt handler of the linux kernel and a device driver, and the event is transmitted to a foreground application for processing, so as to realize an input of the application.

As shown in Fig. IF, input_dev represents a device currently connected to the Android system, and input_handler represents all input processes that can be responded by the Android system. For example, sysrq particularly handles a message generated by a sysrq key in combination with other keys on a keyboard, and kbd handles an ordinary key message.

When the user operates on an input device, a bottom-layer driver captures and translates into the operation information an event and transmits the event to the input handler for processing. The device input process desired by the user is thus completed.

In summary, under the existing technological architecture, as long as driver adaptation is performed on a processing interface of an input device in accordance with the Android, operations or other data input can be performed even in the case of using the interface of the SD card slot.

Referring to Fig. 2A, an embodiment of the disclosure provides a terminal control system. The terminal control system includes: a mobile terminal 10, setting adaptation apparatus 20, and an external input device 30. Fig. 2B is a schematic structural diagram of another terminal control system.

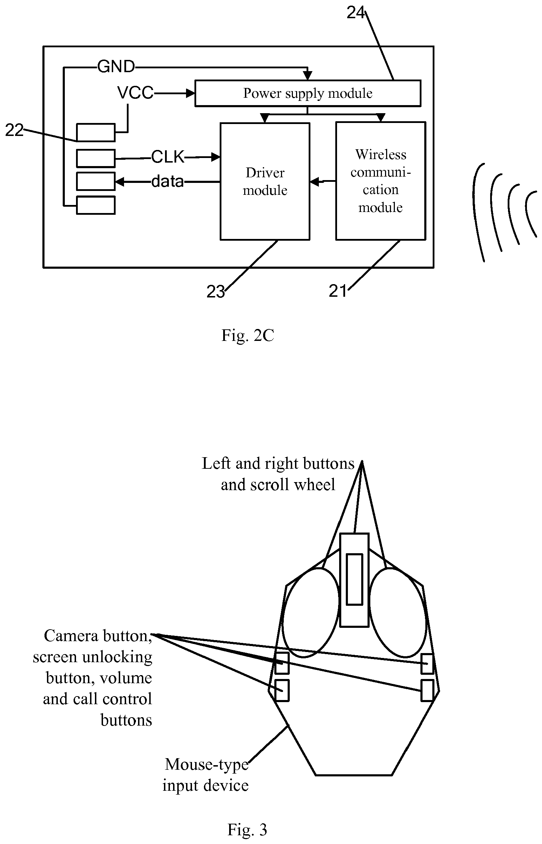

Fig. 2C is a schematic structural diagram of the setting adaptation apparatus 20. As shown in Fig. 2B, the setting adaptation apparatus 20 includes a wireless communication module 21, a first connection pin 22, a driver module 23, and a power supply module 24.

The mobile terminal 10 is provided thereon with a second connection pin 11, the second connection pin 11 is a connection pin in a plug-in card slot.

The external input device 30 acquires a user operation action, and transmits a control signal corresponding to the operation action.

The wireless communication module 21 receives the control signal corresponding to the operation action sent by the external input device 30, and transmits the control signal to the driver module 23. The driver module 23 converts the control signal corresponding to the operation action into a corresponding operation signal according to an interface requirement recognizable by the terminal. The driver module 23 transmits the operation signal to the mobile terminal 10 through the first connection pin 22 and the second connection pin 10. The driver module 23 is configured to identify the control signal and translate the control signal into an operation instruction recognizable by the terminal, and transmit the operation instruction to a data pin in the second connection pin10.

The first connection pin 22 is configured to supply power and an operating clock to the entire setting adaptation apparatus 20.

The wireless communication module 21 can be a Bluetooth or NFC receiving module; the principles of the Bluetooth receiving module and NFC receiving module are essentially the same, and both of them acquire high and low level information through a wireless signal.

After receiving the operation signal, the mobile terminal 10 performs a corresponding operation on the mobile terminal based on the operation signal.

In the embodiment, the terminal is provided in an SD plug-in card slot with a position of a new pin for placing adaptation apparatus. The new pin may be a standard SD card pin or at least four pins of SD card pins for power supply, grounding, clocking, and device detection/data transmission. The adaptation apparatus is inserted into the terminal through the SD plug-in card slot and is connected to the pin.

In the embodiment, the setting adaptation apparatus includes at least a wireless communication module and a driver module. The wireless communication module communicates with an external device (such as an input device or an encryption device) by means of Bluetooth or NFC and the like. The driver module converts, in the device, an acquired input of the external device into an operation that can be processed by the terminal system according to an agreed protocol rule, and transmits the operation to a baseband of the terminal through pins. After receiving the operation, the terminal transmits the operation to an upper-layer application for execution to complete a control or encryption process.

Description is provided below in conjunction with specific implementation scenarios.

In the embodiment, the external input device 30 includes a mouse device 40.

Fig. 3 is a schematic structural diagram of the mouse device 40. The mouse device 40 includes at least one of a left button, a right button, a scroll wheel, a screen unlocking button, a volume+ button, a volume- button, a camera button, and a call control button.

The screen unlocking button is used for illuminating a screen of the mobile terminal.

The volume+ button is used for increasing playback volume of the mobile terminal.

The volume- button is used for reducing the playback volume of the mobile terminal.

The camera button is used for activating a camera APP or switch on a photographing interface, or used for performing a photographing function.

The call control button is used for quick answering an incoming call.

It should be appreciated that the mouse device can also be provided with other shortcut buttons.

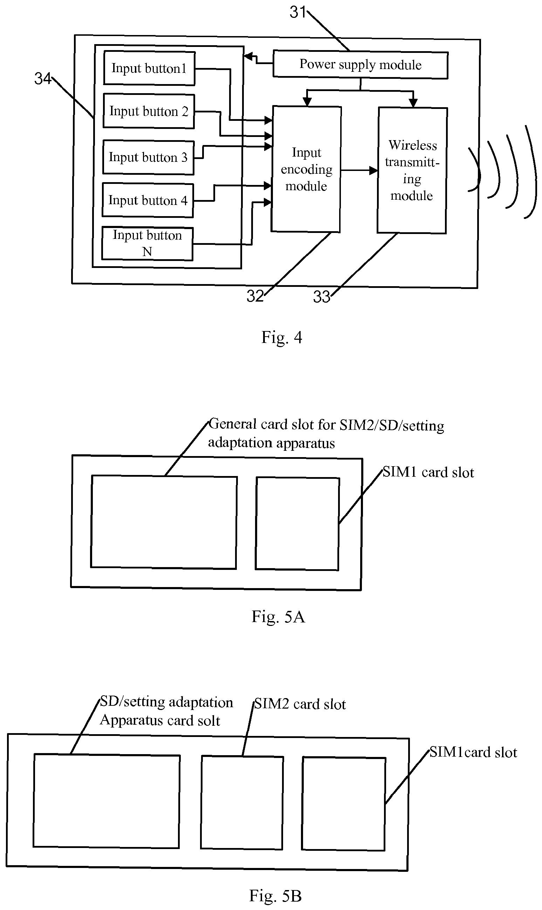

Fig. 4 is a schematic structural diagram of the external input device 30. As shown in Fig. 4, the external input device 30 is a wireless input device. The external input device 30 includes a power supply module 31, an input encoding module 32, a wireless transmitting module 33, and a user input unit 34. The user input unit 34 includes N input buttons.

The user input unit 34 can be a left button or a right button or a scroll wheel of a mouse, or a call control button, a screen control button, a photographing control button, a flashlight control button and so on provided by an embodiment of the disclosure, or even a touch input, the function of which is to allow the user to perform various control of the mobile phone on the wireless input device, so that it is no longer necessary for the user to frequently pick up the mobile phone for operation during a game/video process, and the user's use can thus be rendered convenient.

The input encoding module 32 corresponds to the driver module 23 in Fig. 2 in working principles thereof. That is, the input encoding module 32 encodes the user's operation; the encoded operation is transmitted through wireless transmission to the driver module 23; the driver module 23 then converts the encoded operation into a corresponding user operation instruction based on a predetermined rule, and transmits the user operation instruction to the mobile terminal.

The wireless transmitting module 33 can be a local-area communication module such as Bluetooth or NFC, and it serves to realize short-range wireless communication between the 21 of the setting adaptation apparatus 20 and the wireless transmitting module 33.

The power supply module 31 provides power to the entire wireless input device 30.

Here, only a mouse-type input device is taken as an example. The input device can also be replaced by a keyboard-type or a fingerprint input device, etc., which will not be detailed herein.

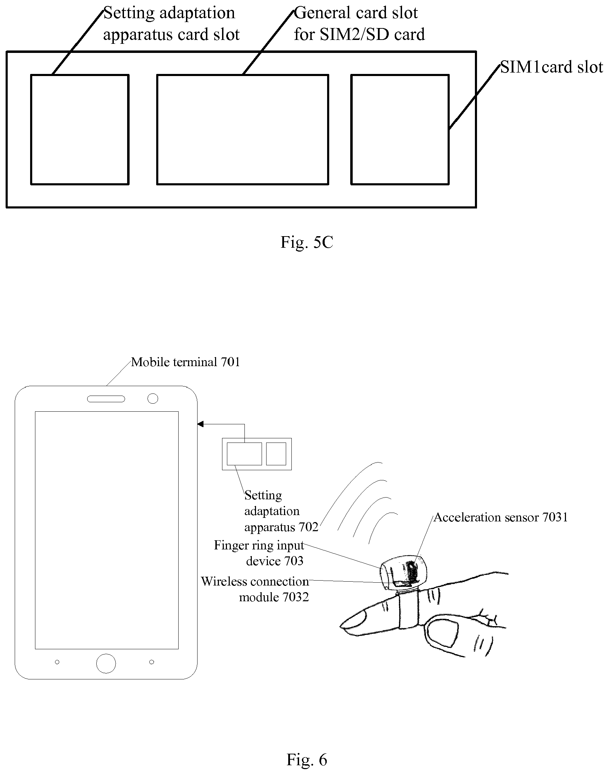

Figs. 5A, Fig. 5B, and Fig. 5C are schematic diagrams showing implementation modes of a card slot and a setting adaptation apparatus according to an embodiment of the disclosure. As shown in Figs. 5A, 5B, and 5C, the setting adaptation apparatus according to the embodiment of the disclosure may use a SD card/SIM card slot, or use a new independent card slot, without affecting the simultaneous use of both an SD card and a SIM card. As shown in Fig. 5A, the setting adaptation apparatus may use the SD card/SIM card slot. As shown in Fig. 5B, the setting adaptation apparatus may use the SD card slot. As shown in Fig. 5C, a new card slot is provided for use by the setting adaptation apparatus.

The external input device according to the embodiment of the disclosure includes not only a conventional mouse, a dongle, etc., but also a new-type input device such as a finger ring. Such small external input devices typically use an acceleration sensor as a control signal generation module so as to complete a user input by measuring characteristics of acceleration. Fig. 6 is a schematic diagram of a finger ring external input device according to the embodiment. The finger ring external input device includes an acceleration sensor 7031 and a wireless connection module 7032. The acceleration sensor acquires acceleration of the finger ring in various directions, and converts the acceleration into a data signal and transmits the data signal to the wireless connection module 7032. The wireless connection module 7032 transmits the signal to a setting adaptation apparatus 702 in a drawer-like card slot as shown in the figure. After receiving the signal, the setting adaptation apparatus 702 converts the control signal into an instruction recognizable by the terminal according to the aforementioned process, and transmits the instruction to the baseband of the terminal through pins interface in the card slot. After receiving the instruction, the terminal performs a corresponding operation.

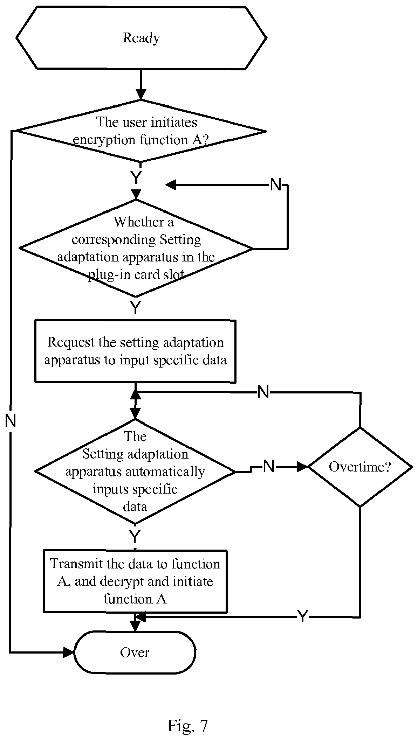

Fig. 7 is an operating flowchart of a setting adaptation apparatus when being used for encryption according to an embodiment of the disclosure . As shown in Fig. 7, the encryption function of the setting adaptation apparatus according to the embodiment needs to be used in conjunction with a corresponding application (hereinafter referred to as application A). When the user initiates a function of the application A having an encryption requirement, the application A first requires that the terminal system check whether there is a corresponding setting adaptation apparatus in the plug-in card slot according to the embodiment of the disclosure. If there is no setting adaptation apparatus, the decryption fails and the function is not initiated. If there is a corresponding setting adaptation apparatus, a request for decryption data is sent to the setting adaptation apparatus.

After receiving the request for decryption data, the setting adaptation apparatus transmits decryption data stored in the setting adaptation apparatus (or acquired from an external device through wireless communication module) to the application A. The decryption data may be a specific keyboard input, a specific mouse click input, or a fingerprint input, etc. After the application A receives specific data and confirms that the specific data is correct, the function is initiated normally. The process of encrypting an internal application by the setting adaptation apparatus according to the embodiment of the disclosure is thus completed.

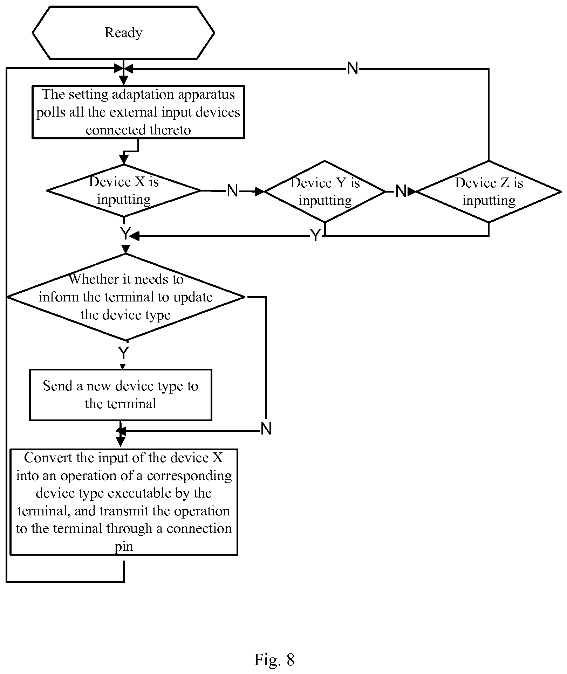

Fig. 8 is a flowchart of a connection process of a setting adaptation apparatus with a plurality of external devices simultaneously via an interface provided by an embodiment of the disclosure. As shown in Fig. 8, when the setting adaptation apparatus is connected simultaneously with a plurality of external input devices through wireless communication (such as Bluetooth), all the external devices are continuously polled at time slots to check whether they are performing a data input. At the same time, it is required that all the external input devices add their device type or device number when inputting their own operations, to allow the setting adaptation apparatus to know the device and the type of the device that is performing the current input.

When the setting adaptation apparatus learns that a data input is being performed by an external input device X, the setting adaptation apparatus first compares a device type of the external input device X with a current device type provided by the setting adaptation apparatus to the terminal. If the device types are consistent, the setting adaptation apparatus needs not to re-inform the terminal of a new device type, and directly converts the data input into a corresponding terminal operation instruction and transmits the terminal operation instruction to the terminal through pins.

Whereas when the device type of the external input device acquired by the setting adaptation apparatus is not consistent with the device type last reported to the terminal, a device type of the external input device needs to be re-informed to the terminal in order to transmit a corresponding operation to the terminal. The terminal then determines an external operation based on the device type in combination with the received specific operation instruction, and transmits the external operation signal to a foreground application for execution, so as to complete the user's control process.

An embodiment of the disclosure further provides a setting adaptation apparatus based on the same or similar concept as that of the above embodiments. The setting adaptation apparatus includes: a wireless communication module, a first connection pin, and a driver module.

The wireless communication module receives a control signal corresponding to an operation action sent by an external input device, and transmits the control signal to the driver module.

The driver module converts the control signal corresponding to the operation action into an operation signal recognizable by the mobile terminal.

The driver module transmits the operation signal to the mobile terminal through the first connection pin.

An embodiment of the disclosure further provides a mobile terminal based on the same or similar concept as that of the above embodiments. The mobile terminal receives the operation signal through the second connection pin in the plug-in card slot, and performs, after receiving the operation signal, a corresponding operation on the mobile terminal based on the operation signal.

An embodiment of the disclosure further provides a terminal control method based on the same or similar concept as that of the above embodiments. The method includes the following steps.

In Step 110, a control signal corresponding to a user operation action is acquired by an external input device.

In Step 120, the external input device transmits the control signal to setting adaptation apparatus.

In Step 130, the setting adaptation apparatus converts transmits the control signal to the mobile terminal. The control signal is transmitted to a second connection pin in a plug-in card slot of the mobile terminal through a first connection pin of the setting adaptation apparatus.

In Step 140, after receiving the operation signal, the mobile terminal performs a corresponding operation on the mobile terminal based on the operation signal.

In the embodiment, data transmission of the external input device and the setting adaptation apparatus is performed in a wireless and encrypted way.

In the embodiment, when the setting adaptation apparatus is connected with the mobile terminal, the setting adaptation apparatus first inform the mobile terminal of a device type of the external input device. The device type matches with the external input device wirelessly connected with the mobile device.

In the embodiment, the device type of the external input device includes at least one of a mouse, a keyboard, fingerprint recognition, and a terminal button.

The setting adaptation apparatus of the disclosure can be wirelessly connected with a plurality of external input devices at the same time. When different external input devices are performing inputs, the setting adaptation apparatus ensures that all the inputs by the external input devices can be properly processed by the terminal by informing the terminal of different device types. See the description of later embodiments for details.

An embodiment of the disclosure further provides a terminal control method based on the same or similar concept as that of the above embodiments. The terminal control method includes the following steps.

In Step 210, a control signal corresponding to an operation action sent by an external input device is received.

In Step 220, the control signal corresponding to the operation action is converted into an operation signal recognizable by a mobile terminal.

In Step 230, the operation signal is transmitted to a second connection pin in a plug-in card slot of the mobile terminal through a first connection pin.

In the embodiment, the terminal control method further includes the following steps.

Permission data is acquired from the external input device.

After an application initiating permission request sent by the mobile terminal is received, the permission data corresponding to the application initiating permission request is transmitted to the mobile terminal.

An embodiment of the disclosure further provides a mobile terminal based on the same or similar concept as that of the above embodiments. The mobile terminal receives an operation signal through a second connection pin in a plug-in card slot, and performs, after receiving the operation signal, a corresponding operation on the mobile terminal based on the operation signal.

As mobile terminals are increasingly used by users as carriers of games and videos, the operability of screens and keys thereof are no longer insufficient to meet user's complex operational needs of games.The technical solutions of the disclosure allow the user to conveniently separate mouses and more control functions of a mobile terminal from the terminal, and to perform the functions externally, by way of which the user can experience the fun of playing games on the mobile terminal with a mouse as on a computer, and meanwhile during the game, whenever it is necessary to answer a call or to suddenly stop the screen, the user can directly complete the operation using a mouse-like input tool in hand, which is very convenient.

On the other hand, in many scenarios where remote operation of the mobile terminal is required, such as staged photographing, remote muting, etc., the disclosure can also offer a good convenience.

The method and apparatus provided by the embodiments of the disclosure can also be used to encrypt the user's applications or functions in respect of security, and can serve as a dongle to fill the gap of mobile phones in this aspect.

In addition, an embodiment of the disclosure further provides an example in which a setting adaptation apparatus corresponds to a plurality of external device inputs, which further increases the scope of using the method of the disclosure, and allows a user to conveniently realize access of a keyboard, a fingerprint input, a mouse, a scanner and so on by means of a built-in setting adaptation apparatus in a SIM/SD card slot, making the management of external devices more systematic and simplified.

It should be noted that the above embodiments are only intended for facilitating the understanding of the disclosure by those skilled in the art, and are not intended to limit the scope of the disclosure. Any apparent substitutions and improvements with respect to the disclosure made by those skilled in the art without departing from the invention concept of the disclosure shall fall within the scope of the disclosure.

### INDUSTRIAL APPLICABILITY

The embodiments provided by the disclosure can be applied to the field of mobile terminals. Compared with the existing technologies, the disclosure provides the technical solutions including a mobile terminal, setting adaptation apparatus, and an external input device. The setting adaptation apparatus is connected to a second connection pin in a plug-in card slot of the mobile terminal through a first connection pin. The external input device acquires a control signal corresponding to a user operation action, and transmits the control signal to the setting adaptation apparatus. The setting adaptation apparatus transmits the control signal to the mobile terminal. After receiving the operation signal, the mobile terminal performs a corresponding operation on the mobile terminal based on the operation signal. The technical solutions of the disclosure allow the user to conveniently separate mouses and more control functions of a mobile terminal from the terminal, and to perform the functions externallyl, by way of which the user can experience the fun of playing games on a mobile terminal with a mouse as on a computer, and meanwhile during the game, whenever it is necessary to answer a call or to suddenly stop the screen, the user can directly complete the operation using a mouse-like input tool in hand, which is very convenient.

## Claims

1. A terminal control system, comprising:
a mobile terminal, setting adaptation apparatus, and an external input device, wherein
the setting adaptation apparatus is connected to a second connection pin in a plug-in card slot of the mobile terminal through a first connection pin;
the external input device is configured to acquire a control signal corresponding to a user operation action, and transmit the control signal to the setting adaptation apparatus, and the setting adaptation apparatus is configured to transmit the control signal to the mobile terminal; and
the mobile terminal is configured to perform, after receiving the operation signal, a corresponding operation on the mobile terminal based on the operation signal.

2. The terminal control system according to claim 1, wherein the external input device is configured to transmit the control signal to the setting adaptation apparatus by means of Bluetooth or NFC or the like.

3. A setting adaptation apparatus, comprising: a wireless communication module, a first connection pin, and a driver module, wherein
the wireless communication module configured to receive a control signal corresponding to an operation action sent by an external input device, and transmit the control signal to the driver module;
the driver module configured to convert the control signal corresponding to the operation action into an operation signal recognizable by the mobile terminal; and
the driver module is configured to transmit the operation signal to the mobile terminal through the first connection pin.

4. A mouse device, comprising a left button, a right button, and a scroll wheel, wherein the mouse device further comprises at least one of a screen unlocking button, a volume+ button, a volume- button, a camera button, and a call control button.

5. A mobile terminal, wherein the mobile terminal is configured to receive an operation signal through a second connection pin in a plug-in card slot, and perform, after receiving the operation signal, a corresponding operation on the mobile terminal based on the operation signal.

6. A terminal control method, comprising:
acquiring a control signal corresponding to a user operation action, and transmitting the control signal to setting adaptation apparatus, by an external input device;
transmitting, by the setting adaptation apparatus, the control signal to the mobile terminal, wherein the control signal is transmitted to a second connection pin in a plug-in card slot of the mobile terminal through a first connection pin of the adaptation apparatus; and
performing, by the mobile terminal, a corresponding operation on the mobile terminal based on the operation signal after the mobile terminal receives the operation signal.

7. The terminal control method according to claim 6, wherein data transmission of the external device and the setting adaptation apparatus is performed in a wireless and encrypted manner.

8. The terminal control method according to claim 6, wherein when the setting adaptation apparatus is connected with the mobile terminal, the setting adaptation apparatus first informs the mobile terminal of a device type of the external input device, the device type matching an input device wirelessly connected with the setting adaptation apparatus.

9. The terminal control method according to claim 6, wherein the device type of the external input device comprises at least one of a mouse, a keyboard, fingerprint recognition, and a terminal button.

10. A terminal control method, comprising:
receiving a control signal corresponding to an operation action sent by an external input device;
converting the control signal corresponding to the operation action into an operation signal recognizable by a mobile terminal; and
transmitting the operation signal to a second connection pin in a plug-in card slot of the mobile terminal through a first connection pin.

11. The terminal control method according to claim 10, further comprising:
acquiring permission data from the external input device; and
transmitting, after an application initiating permission request sent by the mobile terminal is received, the permission data corresponding to the application initiating permission request to the mobile terminal.

12. A mobile terminal, wherein the mobile terminal is configured to receive an operation signal through a second connection pin in a plug-in card slot, and perform, after receiving the operation signal, a corresponding operation on the mobile terminal based on the operation signal.
